# FASCICULE DE BREVET EUROPEEN

(11) **EP 1 966 974 B1**
(45) Date de publication et mention de la délivrance du brevet: **21.01.2015**
(21) Numéro de dépôt: 06847111.9
(22) Date de dépôt: 21.12.2006
(51) Int. Cl.: H04L 29/06

(54) **SYSTEME SECURISE DE SAISIE ET DE TRAITEMENT DE DONNEES D'AUTHENTIFICATION**
SICHERES SYSTEM ZUM EINGEBEN UND VERARBEITEN VON AUTHENTIFIKATIONSDATEN
SECURE SYSTEM FOR INPUTTING AND PROCESSING AUTHENTICATION DATA

(30) Priorité: 30.12.2005 FR 0513506
(43) Date de publication de la demande: 10.09.2008
(73) Titulaire: Trusted Logic Mobility SAS, 92190 Meudon (FR)
(72) Inventeur: LACAS, Samuel, 92120 Montrouge (FR); FREREBEAU, Laurent, 78000 Versailles (FR)
(74) Mandataire: Robinson, Nigel Alexander Julian
(86) Numéro de dépôt international: PCT/FR2006/002836
(87) Numéro de publication internationale: WO 2007/077348

(56) Documents cités:
- WO-A-03/084127
- US-A1- 2001 000 358
- US-A1- 2004 193 921

## Description

La présente invention concerne un système sécurisé de saisie et de traitement de données d'authentification.

Par données d'authentification, il faut entendre aussi bien les données d'authentification proprement dites que des données d'identification.

De nombreuses applications informatiques reposent, pour leur sécurité, sur l'identification et/ou l'authentification de leurs utilisateurs et sur l'application de règles de contrôle d'accès à des ressources sensibles reposant sur le résultat de cette opération. Par authentification, on entend tout procédé permettant à l'application de s'assurer que l'utilisateur est bien celui qu'il prétend être, ou, à tout le moins, qu'il est possesseur d'une information particulière lui donnant l'autorisation d'accéder à cette application. La version la plus commune des procédés d'authentification repose sur une paire « identifiant - mot de passe ».

L'homme du métier connaît de nombreux autres procédés d'authentification dont les plus sophistiqués reposent sur la combinaison de plusieurs facteurs d'authentification (« ce que l'on est, ce que l'on possède, ce que l'on sait ») impliquant par exemple des générateurs de « mots de passe jetables », des cartes à puce faisant usage de moyens cryptographiques (et en particulier de cryptographie à clé publique), des données biométriques, etc.

Un des problèmes majeurs que doivent résoudre tous ces systèmes ou procédés d'authentification est la sécurité des données sensibles (identifiant, mot de passe, ...), et pour certaines secrètes, permettant cette authentification, et ceci tout particulièrement lors de leur saisie. La plupart des procédés d'authentification actuels prévoient des mécanismes de protection de ces données, notamment lorsqu'elles doivent être stockées avant d'être utilisées (au moyen d'une carte à puce par exemple), ou au moment de leur transmission, vers une application ou un serveur d'authentification par exemple, au travers d'un environnement « à risque » tel qu'un réseau ouvert (Internet, typiquement). Par contre, peu de systèmes proposent un mécanisme sûr, tant du point de vue de l'utilisateur que de celui de l'opérateur du serveur d'authentification ou de l'application, permettant de garantir que la saisie des données d'authentification est faite dans un environnement « de confiance », c'est-à-dire contrôlé et dûment autorisé à manipuler de telles données.

Certains systèmes, tels que les terminaux de paiement et les appareils de signature électronique par exemple, apportent des solutions à cette problématique. Ils permettent en particulier à l'utilisateur de saisir le PIN code permettant d'accéder à la carte à puce insérée dans ces matériels au moyen d'une électronique, de périphériques (un clavier, un écran et un lecteur de carte à puce dédiés par exemple) et d'une portion de code au comportement et au cycle de vie étroitement contrôlés. Ces appareils sont en général dédiés à cette seule tâche et, si certains permettent de configurer le processus de saisie des données d'authentification de l'utilisateur au moyen d'applications spécialisées (comme c'est le cas par exemple des terminaux implémentant la spécification FINREAD, qui permettent le chargement de mini-applications interprétées), ils restent cantonnés à un rôle de « terminal de saisie » n'offrant aucune facilité supplémentaire à l'utilisateur, telle que du traitement de flot de communication et de l'authentification unique, lors d'interactions avec un système informatique distribué depuis un poste de travail banalisé.

Les ordinateurs de bureau actuels ne comportent, en standard, que de faibles moyens de sécurité, ce qui peut permettre à des tiers d'intercepter des données confidentielles transitant sur ces machines. Un exemple bien connu de logiciel d'interception est la famille des logiciels qui interceptent les informations en provenance du clavier de l'ordinateur (« keylogger » en anglais).

Ce problème est particulièrement crucial dans des environnements de type familial ou petite entreprise dans la mesure où les utilisateurs ont de très faibles connaissances en sécurité informatique et installent souvent sur leurs machines des applications variées dont la provenance et la qualité ne sont pas vérifiées.

Le but de l'invention est donc de proposer un système de saisie des données d'authentification qui soit sécurisé et utilisable dans un environnement techniquement riche mais peu sécurisé tel que peut l'être un environnement informatique familial composé typiquement d'un ou plusieurs ordinateurs de bureau, d'un réseau local et d'un concentrateur d'accès (routeur, modem, passerelle de services, ...) à un réseau plus large tel que le réseau internet.

L'objet de l'invention est donc un système de saisie, de traitement et de transfert sécurisé de données d'authentification comportant :
- au moins un périphérique d'interface avec un utilisateur, ledit périphérique comportant des moyens de communication et un mode de fonctionnement sécurisés adaptés pour la collecte de données d'authentification, l'accès à un composant de sécurité, et le transfert sûr des données par lesdits moyens de communication, et
- un serveur d'interposition comportant un module de sécurité, ledit module de sécurité comportant :
   - des moyens de communication sécurisée avec le périphérique d'interface fonctionnant en mode sécurisé,
   - des moyens de pilotage du périphérique d'interface adaptés pour que l'utilisateur saisisse des données d'authentification sur ledit périphérique d'interface fonctionnant en mode sécurisé, lesdits moyens de pilotage étant aptes à traiter lesdites données d'authentification.

D'autres caractéristiques de cet objet sont :
- les moyens de pilotage du périphérique d'interface sont programmables de façon sécurisée et sous le contrôle du module de sécurité pour adapter le mode de saisie des données d'authentification aux besoins d'un serveur d'authentification ;
- le périphérique d'interface est programmable de façon sécurisée pour adapter le mode de saisie des données d'authentification aux besoins d'un ou du serveur d'authentification ;
- la programmation du périphérique d'interface est faite à travers le module de sécurité ;
- le serveur d'interposition comporte :
   - des moyens de transmission de données tels que toutes les communications de données entre l'utilisateur et au moins un serveur distant transitent par ledit serveur d'interposition,
   - des moyens d'analyse du flux de données transitant aptes à détecter une requête d'authentification, lesdits moyens d'analyse étant aptes à déclencher alors le module de sécurité au travers des moyens d'accès et ledit module de sécurité étant apte à initier une session d'authentification avec le serveur d'authentification, puis activer la saisie des données d'authentification de l'utilisateur au travers des moyens de pilotage du périphérique d'interface ;
- le serveur d'interposition comporte en outre des moyens de gestion de sessions d'accès de postes de travail au serveur d'interposition, ces moyens étant appelés par les moyens d'analyse de flux lorsque qu'un nouvel accès depuis lesdits postes de travail au serveur d'interposition est détecté, et lesdits moyens de gestion de session étant adaptés pour :
- gérer et maintenir des identifiants de session d'accès des postes de travail au serveur d'interposition,
- gérer et maintenir des données d'authentification des sessions d'accès des postes de travail au serveur d'interposition,
- permettre l'authentification des sessions d'accès des postes de travail au serveur d'interposition ;
- les moyens de gestion de sessions sont hébergés dans le module de sécurité ; ou
- les moyens de gestion de sessions sont hébergés dans le serveur d'interposition, en dehors du module de sécurité, et sous la surveillance de celui-ci ;
- les moyens de gestion de sessions d'accès au serveur d'interposition sont adaptés pour :
- réceptionner des moyens d'analyse de flux des preuves d'authentification de l'utilisateur produites par le serveur d'authentification,
- associer ces preuves d'authentification à une session d'accès des postes de travail au serveur d'interposition,
- appliquer une politique de réutilisation de ces preuves d'authentification, et en particulier déclencher une nouvelle procédure de saisie de donnée d'authentification si :
   - le serveur distant exige une ré authentification,
   - le serveur distant exige une méthode d'authentification particulière qui n'est pas celle avec laquelle ont été obtenues les preuves d'authentification existantes,
   - la politique de réutilisation des preuves d'authentification exige une ré authentification parce que :
      - la validité des preuves d'authentification est dépassée,
      - la nouvelle requête d'authentification requiert une méthode de saisie des données d'authentification d'un niveau de sécurité supérieur à la méthode de saisie utilisée pour obtenir les preuves d'authentification existantes.

L'invention sera mieux comprise à la lecture de la description qui va suivre, faite uniquement à titre d'exemple, et en référence aux dessins en annexe dans lesquels :
- la figure 1 est un schéma d'un système de saisie, traitement et transfert de données d'authentification selon un mode de réalisation de l'invention ; et
- la figure 2 est un ordinogramme du fonctionnement du système de la figure 1.

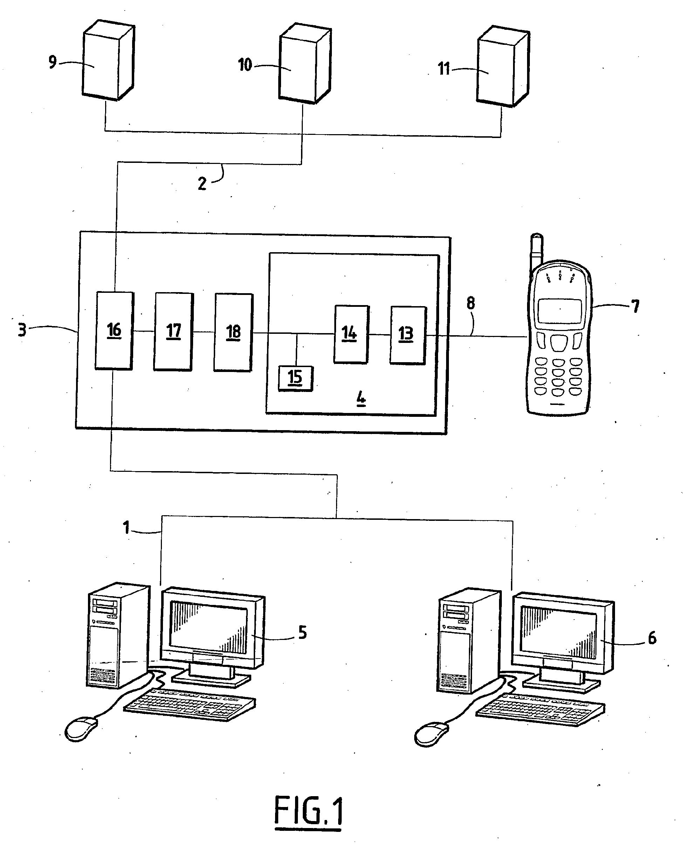

En référence à la figure 1, un réseau local 1 est installé, par exemple, dans la demeure d'un particulier.

Typiquement, ce réseau local est connecté au réseau internet 2 par un boîtier 3 faisant office, en particulier, de passerelle de communication.

Suivant les offres commerciales des fournisseurs, le boîtier 3 peut remplir de nombreuses fonctions telles que des fonctions de routage, de pare-feu, de modem ADSL, de gestion de flux vidéo, ...

Dans la suite de la description, ce boîtier 3 sera appelé « serveur d'interposition » pour souligner son rôle d'interface entre le réseau local 1 et le réseau internet 2.

Le serveur d'interposition 3 comporte un module de sécurité 4. Ce module de sécurité 4 est conçu et développé pour avoir un comportement sécurisé, exécuter des opérations sécuritaires (traitements cryptographiques, interactions de confiance avec l'utilisateur, pilotage de périphériques de sécurité, ...), restreindre l'accès à des ressources sensibles (périphériques et/ou données) et protéger des données dont l'origine, l'intégrité et/ou la confidentialité doivent être garanties.

Le réseau local 1 et le serveur d'interposition 3 permettent la connexion de stations de travail 5, 6 au réseau internet 2. Le réseau local 1, comme les stations de travail 5, 6 sont des éléments classiques. Par exemple, le réseau local 1 est un réseau filaire à la norme Ethernet, et/ou un réseau sans-fil à la norme IEEE 802.11.

Un périphérique d'interface 7 est connecté au module de sécurité 4 du serveur d'interposition 3 par une liaison sécurisée 8. Le périphérique d'interface 7 est, par exemple, un PDA (assistant personnel numérique) ou un téléphone portable comportant un serveur d'affichage ou un environnement d'exécution plus riche, ou bien un lecteur de cartes à puce avec un clavier et un écran. Une caractéristique de ce périphérique réside dans sa relative « simplicité », comparée notamment à la richesse fonctionnelle et à la complexité d'un poste de travail. De plus, ce périphérique est un objet personnel de l'utilisateur qui, lui accorde sa confiance pour un certain nombre de traitements sensibles dont la saisie de ses données d'authentification.

La liaison sécurisée 8 est une liaison filaire ou sans fil, par exemple, une liaison à la norme Bluetooth ou, dans le cas d'un lecteur de cartes à puce installé en périphérique d'une station de travail, une liaison USB. La sécurisation de ces liaisons, s'appuie par exemple sur le partage préalable de clés cryptographiques entre le module de sécurité 4 et le périphérique d'interface 7, et sur le chiffrement des messages échangés par le module de sécurité 4 et le périphérique d'interface 7 au travers de la liaison 8. De tels mécanismes sont disponibles sur les protocoles de communication Ethernet, Bluetooth et IEEE 802.11, ou dans les protocoles de communication de plus haut niveau (TCP/IP par exemple) qui les utilisent.

Le réseau internet 2 permet classiquement l'accès à des serveurs distants 9, 10 offrant des services divers dont certains requièrent une authentification des utilisateurs.

De plus, un serveur 11 dit serveur d'authentification, qui appartient en général au fournisseur d'accès proposant à l'utilisateur une connexion au réseau internet, concentre les fonctions d'identification et d'authentification requises par les serveurs 9 et 10.

Le module de sécurité 4 comporte des premiers moyens 13 de communication sécurisée avec le périphérique d'interface 7. Plus spécifiquement, les premiers moyens 13 de communication implémentent la sécurisation de la liaison 8.

Le module de sécurité 4 comporte également des moyens de pilotage 14 du périphérique d'interface 7 et préférentiellement des moyens 15 de gestion de session des postes de travail 5, 6 au serveur d'interposition 3. Ces moyens 15 de gestion de session sont chargés de gérer les identifiants de session et les éléments cryptographiques nécessaires à la sécurisation d'une connexion entre le serveur d'interposition 3 et la station de travail 5 ou 6, et plus précisément, à la sécurisation d'une session utilisateur entre le serveur d'interposition 3 et un processus s'exécutant sur la station de travail 5 ou 6.

Il est à noter que ces moyens 15 de gestion de session sont optionnels dès lors où, par construction ou par nécessité, le besoin de distinguer les stations de travail 5 et 6, ou des processus s'exécutant sur les stations de travail 5 et 6 n'est pas justifié ou n'est pas demandé. Typiquement, un utilisateur souhaitant bénéficier d'une session ouverte sur le poste de travail 5 peut ainsi, sans ré authentification supplémentaire, bénéficier de cette session sur le poste de travail 6.

Dans un mode préférentiel de réalisation, le serveur d'interposition 3 comporte des moyens 16 de transmission de données tels que toutes les communications de données entre un utilisateur d'une des stations de travail 5 ou 6 et les serveurs distants 9 ou 10 transitent par le serveur d'interposition 3.

Le serveur d'interposition 3 comporte également des moyens 17 d'analyse du flux de données transitant par les moyens 16 de transmission ainsi que des moyens 18 d'accès au module de sécurité 4.

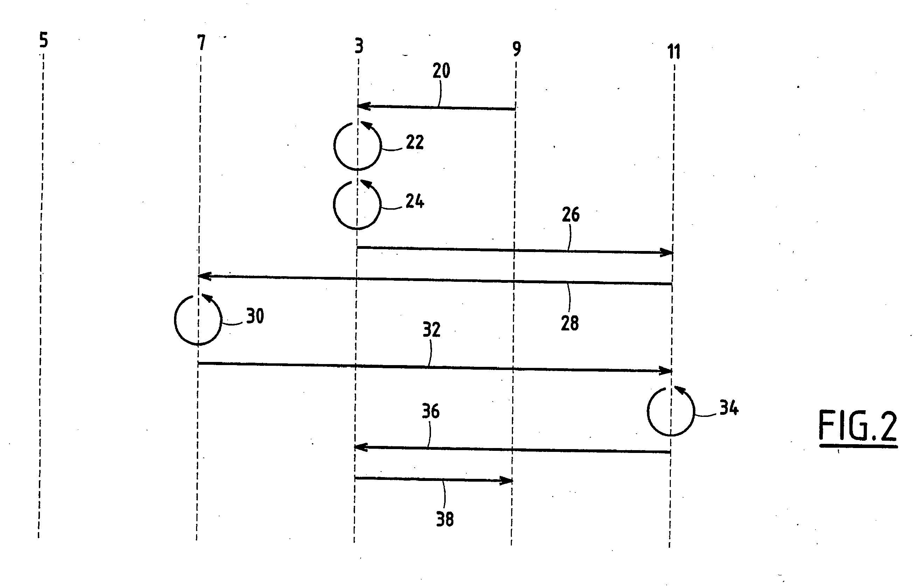

Le fonctionnement du système ainsi décrit va maintenant être explicité en relation avec la figure 2.

Dans une première étape préalable, le serveur d'authentification 11 a stocké les éléments nécessaires à l'authentification d'un utilisateur, par exemple son identifiant et son mot de passe. Ces éléments sont classés par niveau de sécurité. Par exemple, un couple identifiant/mot de passe est classé avec un niveau de sécurité faible alors que des éléments de cryptographie tels que des paires de clés sont classés avec un niveau de sécurité élevé.

Lors d'une navigation sur internet, l'utilisateur de la station de travail 5, par exemple, souhaite accéder à un service sur le serveur distant 9 nécessitant une authentification. Cette requête part de la station de travail 5 et traverse le serveur d'interposition 3. Les moyens 16, 17 de transmission et d'analyse établissent, de façon préférentielle, une session, éventuellement sécurisée, entre le poste de travail 5 et le serveur d'interposition 3, au moyen des moyens 15 de gestion de session et d'éléments d'identification ou d'authentification de poste de travail ou de processus, stockés préalablement dans les moyens 15 de gestion de session. Les moyens 16 de transmission transmettent ensuite la requête du poste de travail 5 au serveur distant 9.

Le serveur distant 9 réceptionne la requête, décide qu'une authentification de l'utilisateur de la station de travail 5 est nécessaire, et émet en 20 une requête d'authentification à destination de l'utilisateur de la station de travail 5.

Les moyens 17 d'analyse du flux de données détectent en 22 cette requête et appellent en 24 le module de sécurité 4 ; celui-ci leur fournit les éléments à transmettre au serveur d'authentification 11 pour initier une session d'authentification. En 26, les moyens 17 d'analyse du flux de données envoient les données reçues du module de sécurité 4, via les moyens de transmission 16, au serveur d'authentification 11 et réceptionnent de celui-ci les éléments à utiliser pour procéder à l'authentification de l'utilisateur. Ces éléments peuvent comporter le code des moyens de pilotage 14 à installer et à exécuter dans l'environnement d'exécution sûr du module de sécurité 4, ainsi que des données à présenter à l'utilisateur, des aléas d'authentification, etc. Ces éléments sont transmis en 28 au module de sécurité 4 qui active les moyens de pilotage 14 pour procéder à la saisie et au traitement des données d'authentification.

Dans un mode de réalisation préférentiel, le module de sécurité 4 et/ou le périphérique d'interface 7 sont programmables, permettant ainsi au serveur d'authentification d'adapter finement l'interface de saisie des données d'authentification et le mode de traitement des données d'authentification avant leur transfert vers le serveur d'authentification 11.

L'utilisateur saisit en 30 les données d'authentification sur le périphérique d'interface 7, puis ces données sont transmises en 32 au serveur d'authentification 11 par l'intermédiaire du module de sécurité 4, et des moyens 16, 17de transmission et de filtrage de flux.

Le serveur d'authentification 11 vérifie en 34 les données d'authentification grâce aux informations préalablement stockées.

Si les données sont correctes, et donc l'utilisateur authentifié, le serveur d'authentification 11 envoie en 36 au module de sécurité 4 une preuve d'authentification que le serveur d'interposition 3 transmet, en 38, d'une part aux moyens 15 de gestion de session pour usage ultérieur, et d'autre part au serveur distant 9, permettant à celui-ci de fournir le service demandé.

Dans un mode de réalisation préférentiel, les moyens 15 de gestion de session stockent les preuves d'authentification de l'utilisateur pour les besoins d'un ou plusieurs sessions d'accès au réseau internet 2, et appliquent les règles de réutilisation de ces preuves d'authentification définies par le gestionnaire du serveur d'interposition 3. Cela permet avantageusement de ne plus demander à l'utilisateur de s'authentifier, pendant la durée de sa navigation, pour les serveurs distants 9, 10 demandant le même niveau d'authentification, le serveur d'interposition 3 se chargeant de transmettre une preuve d'authentification adéquate à chaque nouvelle requête d'authentification provenant d'un serveur distant 9, 10.

Ainsi, le système de saisie décrit permet avantageusement à l'utilisateur de protéger ses données d'authentification tout en accédant à des applications à accès restreint depuis une station de travail standard, la saisie des données d'authentification étant protégée des risques d'interception pouvant exister sur une telle station de travail par l'utilisation d'un périphérique d'interface spécifique sécurisé, piloté par un serveur d'interposition lui aussi sécurisé, ces deux composants entretenant une relation de confiance mutuelle, le serveur d'interposition entretenant par ailleurs une relation de confiance mutuelle avec le serveur d'authentification, et le service à accès restreint ayant confiance dans le serveur d'authentification qui le dessert.

L'utilisation d'une session d'utilisateur permet avantageusement à l'utilisateur de ne saisir ses données d'authentification qu'une seule fois pour toute la durée de la navigation. La sécurisation de cette session permet de restreindre la réutilisation des preuves d'authentification acquises par chaque utilisateur à une session particulière, qui peut être liée à un poste de travail donné ou à un processus donné s'exécutant sur un poste de travail.

De façon préférentielle, cette session d'authentification s'adapte au niveau de sécurité requis par les serveurs distants 9,10. Ainsi, si un serveur distant 9, 10 nécessite un niveau de sécurité de l'authentification supérieur à celui en cours pour la session, le serveur d'interposition 3, par l'intermédiaire de son module de sécurité 4, déclenche une nouvelle acquisition de données d'authentification adaptée à ce niveau de sécurité supérieur. Une fois cette nouvelle authentification réalisée, les moyens de gestion de session utilisateur permettent d'assurer une authentification transparente pour l'utilisateur pour tous les serveurs distants nécessitant un niveau de sécurité de l'authentification égal ou inférieur au niveau réalisé, suivant une politique d'authentification convenue à l'avance, et éventuellement reconfigurable par le gestionnaire du serveur d'interposition 3.

Ce système permet avantageusement de limiter le nombre de saisies de données d'authentification que doit faire l'utilisateur, tout en protégeant les phases de saisie de données d'authentification et de réutilisation de preuves d'authentification aux moyens de composants spécialisés.

Il est à noter que pour permettre un échange aisé entre les serveurs distants 9, 10 et le serveur d'authentification 11, les caractéristiques de l'authentification ainsi que le format de la preuve d'authentification sont avantageusement conformes aux spécifications de la « Liberty Alliance » (www.projectliberty.org).

Il est à noter par ailleurs que l'utilisation du module de sécurité 4 sur le serveur d'interposition 3 permet de concentrer les fonctionnalités de sécurité dans un volume de code et dans un espace logique et éventuellement physique restreint, ce qui présente l'avantage technique d'en faciliter la sécurisation, la vérification et l'évaluation sécuritaire, et l'avantage économique de restreindre le coût de cette sécurisation et de la certification de ses propriétés de sécurité.

Il est à noter enfin que le périphérique d'interface 7 peut-être avantageusement conçu sur les mêmes principes que le serveur d'interposition 3, avec en particulier un module de sécurité en charge des opérations sensibles s'exécutant sur ce périphérique d'interface. Tout comme le module de sécurité 4, le module de sécurité du périphérique d'interface 7 peut être étendu ou reconfiguré au moyen d'applications téléchargées et installées par un opérateur de confiance dans l'environnement d'exécution sécurisé de ce module de sécurité. De façon préférentielle, ces modules pourront être téléchargés et activés sur le périphérique d'interface 7 par les moyens 14 de pilotage, typiquement sur commande du serveur d'authentification 11.

Le système proposé rend donc possible et viable le développement et l'exploitation sûre de serveurs intermédiaires en mesure d'apporter une valeur ajoutée sécuritaire appréciable aux fournisseurs de services et à leurs utilisateurs.

## Revendications

1. Système de saisie, de traitement et de transfert sécurisé de données d'authentification comportant :
- au moins un périphérique d'interface (7) avec un utilisateur, ledit périphérique comportant des moyens de communication et un mode de fonctionnement sécurisés adaptés pour la collecte de données d'authentification, l'accès à un composant de sécurité, et le transfert sur des données par lesdits moyens de communication, et
- un serveur d'interposition (3) comportant un module de sécurité (4), ledit module de sécurité comportant :
- des moyens (13) de communication sécurisée avec le périphérique d'interface (7) fonctionnant en mode sécurisé,
- des moyens (14) de pilotage du périphérique d'interface adaptés pour que l'utilisateur saisisse des données d'authentification sur ledit périphérique d'interface (7) fonctionnant en mode sécurisé, lesdits moyens de pilotage étant aptes à traiter lesdites données d'authentification,
- des moyens (16) de transmission de données tels que toutes les communications de données entre l'utilisateur d'une station de travail (5, 6) et au moins un serveur distant (9, 10) transitent par ledit serveur d'interposition,
- des moyens (17) d'analyse du flux de données transitant aptes à détecter une requête d'authentification générée par le serveur distant (9,10) à destination de l'utilisateur de la station de travail (5, 6), lesdits moyens d'analyse étant aptes à déclencher alors le module de sécurité (4) au travers de moyens (18) d'accès, et ledit module de sécurité (4) étant apte à initier une session d'authentification avec un serveur d'authentification (11), à activer la saisie des données d'authentification de l'utilisateur au travers des moyens (14) de pilotage du périphérique d'interface (7), afin que l'utilisateur saisisse les données d'authentification sur le périphérique d'interface (7), et à transmettre les données d'authentification au serveur d'authentification (11).

2. Système selon la revendication 1, dans lequel les moyens (14) .de pilotage du périphérique d'interface (7) sont programmables de façon sécurisée et sous le contrôle du module de sécurité (4) pour adapter le mode de saisie des données d'authentification aux besoins d'un serveur d'authentification (11).

3. Système selon la revendication 1 ou 2, dans lequel le périphérique d'interface (7) est programmable de façon sécurisée pour adapter le mode de saisie des données d'authentification aux besoins d'un ou du serveur d'authentification (11).

4. Système selon la revendication 3, dans lequel la programmation du périphérique d'interface (7) est faite à travers le module de sécurité (4).

5. Système selon l'une quelconque des revendications 1 à 4, dans lequel le serveur d'interposition comporte en outre des moyens (15) de gestion de sessions d'accès de postes de travail (5, 6) au serveur d'interposition (3), ces moyens (15) étant appelés par les moyens (17) d'analyse de flux lorsque qu'un nouvel accès depuis lesdits postes de travail au serveur d'interposition (3) est détecté, et lesdits moyens de gestion de session étant adaptés pour :
- gérer et maintenir des identifiants de session d'accès des postes de travail (5, 6) au serveur d'interposition (3),
- gérer et maintenir des données d'authentification des sessions d'accès des postes de travail (5, 6) au serveur d'interposition (3),
- permettre l'authentification des sessions d'accès des postes de travail (5, 6) au serveur d'interposition (3).

6. Système selon la revendication 5, dans lequel les moyens (15) de gestion de sessions sont hébergés dans le module de sécurité (4), et accèdes par les moyens (17) d'analyse de flux au travers des moyens (18) d'accès au module de sécurité (4).

7. Système selon la revendication 5, dans lequel les moyens (18) de gestion de sessions sont hébergés dans le serveur d'interposition (3), en dehors du module de sécurité (4), et sous la surveillance de celui-ci.

8. Système selon les revendications 6 ou 7, dans lequel les moyens (15) de gestion de sessions d'accès au serveur d'interposition (3) sont adaptés pour :
- réceptionner des moyens (17) d'analyse de flux des preuves d'authentification de l'utilisateur produites par le serveur d'authentification (11),
- associer ces preuves d'authentification à une session d'accès des postes de travail (5, 6) au serveur d'interposition (3),
- appliquer une politique de réutilisation de ces preuves d'authentification, et en particulier déclencher une nouvelle procédure de saisie de donnée d'authentification si :
- le serveur distant (9, 10) exige une ré authentification,
- le serveur distant (9, 10) exige une méthode d'authentification particulière qui n'est pas celle avec laquelle ont été obtenues les preuves d'authentification existantes,
- la politique de réutilisation des preuves d'authentification exige une ré authentification parce que :
- la validité des preuves d'authentification est dépassée,
- la nouvelle requête d'authentification requiert une méthode de saisie des données d'authentification d'un niveau de sécurité supérieur à la méthode de saisie utilisée pour obtenir les preuves d'authentification existantes.

9. Procédé de saisie, de traitement et de transfert sécurisé de données d'authentification, **caractérisé en ce qu'**il comporte les étapes suivantes :
- transmission de données tels que toutes les communications de données entre un utilisateur d'une station de travail (6, 6) et au moins un serveur distant (9, 10) transitent par un serveur d'interposition (3) comportant un module de sécurité (4), ledit module de sécurité étant apte à communiquer en mode sécurisé avec un périphérique d'interface (7) dudit utilisateur,
- pilotage du périphérique d'interface (7) par le module de sécurité de sorte que l'utilisateur saisisse des données d'authentification sur ledit périphérique d'interface (7) fonctionnant en mode sécurisé,
- analyse du flux de données transitant via le serveur d'interposition de sorte à détecter une requête d'authentification générée par le serveur distant (9,10) à destination de l'utilisateur de la station de travail (5, 6), ladite analyse étant destinée à déclencher alors le module de sécurité (4) au travers de moyens (18) d'accès, et ledit module de sécurité (4) étant apte à initier une session d'authentification avec un serveur d'authentification (11), a activer la saisie des données d'authentification de l'utilisateur au travers des moyens (14) de pilotage du périphérique d'interface (7), afin que l'utilisateur saisisse les données d'authentification sur le périphérique d'interface (7), et à transmettre les données d'authentification au serveur d'authentification (11).

## Patentansprüche

1. System zur Eingabe, zur Verarbeitung und zur sicheren Übertragung von Authentisierungsdaten, das aufweist:
- mindestens ein Peripheriegerät (7) als Schnittstelle mit einem Benutzer, wobei das Peripheriegerät gesicherte Kommunikationseinrichtungen und einen gesicherten Betriebsmodus aufweist, die zum Sammeln von Authentisierungsdaten, für den Zugang zu einem Sicherheitsbauteil und die sichere Übertragung der Daten durch die Kommunikationseinrichtungen geeignet sind, und
- einen Zwischenschaltungsserver (3), der ein Sicherheitsmodul (4) aufweist, wobei das Sicherheitsmodul aufweist:
- Einrichtungen (13) zur gesicherten Kommunikation mit dem Schnittstellen-Peripheriegerät (7), das im gesicherten Modus arbeitet,
- Einrichtungen (14) zum Steuern des Schnittstellen-Peripheriegeräts, die geeignet sind, damit der Benutzer Authentisierungsdaten in sein im gesicherten Modus arbeitendes Schnittstellen-Peripheriegerät (7) eingibt, wobei die Steuereinrichtungen die Authentisierungsdaten verarbeiten können,
- Einrichtungen (16) zur Datenübertragung derart, dass alle Datenkommunikationen zwischen dem Benutzer eines Arbeitsplatzes (5, 6) und mindestens einem fernen Server (9, 10) über den Zwischenschaltungsserver gehen,
- Einrichtungen (17) zur Analyse des durchgehenden Datenflusses, die eine vom fernen Server (9, 10) erzeugte Authentisierungsanforderung an den Benutzer des Arbeitsplatzes (5, 6) erfassen können, wobei die Analyseeinrichtungen dann das Sicherheitsmodul (4) über Zugangseinrichtungen (18) auslösen können, und das Sicherheitsmodul (4) eine Authentifizierungssitzung mit einem Authentifizierungsserver (11) initiieren, die Eingabe der Authentisierungsdaten des Benutzers über die Steuereinrichtungen (14) des Schnittstellen-Peripheriegeräts (7) aktivieren, damit der Benutzer die Authentisierungsdaten in das Schnittstellen-Peripheriegerät (7) eingibt, und die Authentisierungsdaten an den Authentifizierungsserver (11) übertragen kann.

2. System nach Anspruch 1, wobei die Steuereinrichtungen (14) des Schnittstellen-Peripheriegeräts (7) gesichert und unter Kontrolle durch das Sicherheitsmodul (4) programmierbar sind, um den Eingabemodus der Authentisierungsdaten an die Bedürfnisse eines Authentifizierungsservers (11) anzupassen.

3. System nach Anspruch 1 oder 2, wobei das Schnittstellen-Peripheriegerät (7) gesichert programmierbar ist, um den Eingabemodus der Authentisierungsdaten an die Bedürfnisse eines oder des Authentifizierungsservers (11) anzupassen.

4. System nach Anspruch 3, wobei die Programmierung des Schnittstellen-Peripheriegeräts (7) über das Sicherheitsmodul (4) erfolgt.

5. System nach einem der Ansprüche 1 bis 4, wobei der Zwischenschaltungsserver außerdem Einrichtungen (15) zur Verwaltung von Zugangssitzungen von Arbeitsplätzen (5, 6) zum Zwischenschaltungsserver (3) aufweist, wobei diese Einrichtungen (15) von den Flussanalyseeinrichtungen (17) angerufen werden, wenn ein neuer Zugang von den Arbeitsplätzen zum Zwischenschaltungsserver (3) erfasst wird, und die Sitzungsverwaltungseinrichtungen geeignet sind, um:
- Zugangssitzungskennungen der Arbeitsplätze (5, 6) zum Zwischenschaltungsserver (3) zu verwalten und zu halten,
- Authentisierungsdaten der Zugangssitzungen der Arbeitsplätze (5, 6) zum Zwischenschaltungsserver (3) zu verwalten und zu halten,
- die Authentisierung der Zugangssitzungen der Arbeitsplätze (5, 6) zum Zwischenschaltungsserver (3) zu erlauben.

6. System nach Anspruch 5, wobei die Einrichtungen (15) zur Sitzungsverwaltung im Sicherheitsmodul (4) untergebracht sind und von den Einrichtungen (17) zur Flussanalyse über Zugangseinrichtungen (18) zum Sicherheitsmodul (4) auf sie zugegriffen wird.

7. System nach Anspruch 5, wobei die Einrichtungen (15) zur Sitzungsverwaltung im Zwischenschaltungsserver (3) außerhalb des Sicherheitsmoduls (4) und unter Überwachung durch dieses untergebracht sind.

8. System nach den Ansprüchen 6 oder 7, wobei die Einrichtungen (15) zur Verwaltung von Zugangssitzungen zum Zwischenschaltungsserver (3) geeignet sind, um:
- von den Flussanalyseeinrichtungen (17) Authentisierungsbeweise des Benutzers zu empfangen, die vom Authentifizierungsserver (11) erzeugt werden,
- diese Authentisierungsbeweise einer Zugangssitzung der Arbeitsplätze (5, 6) zum Zwischenschaltungsserver (3) zuzuordnen,
- eine Wiederbenutzungspolitik dieser Authentisierungsbeweise anzuwenden und insbesondere eine neue Eingabeprozedur eines Authentisierungsdatenwerts auszulösen, wenn:
- der ferne Server (9, 10) eine erneute Authentisierung verlangt,
- der ferne Server (9, 10) ein besonderes Authentisierungsverfahren verlangt, das nicht dasjenige ist, mit dem die existierenden Authentisierungsbeweise erhalten wurden,
- die Politik der Wiederbenutzung der Authentisierungsbeweise eine erneute Authentisierung verlangt, weil:
- die Gültigkeit der Authentisierungsbeweise abgelaufen ist,
- die neue Authentisierungsanforderung ein Eingabeverfahren der Authentisierungsdaten mit einem höheren Sicherheitsniveau als das Eingabeverfahren fordert, das für den Erhalt der existierenden Authentisierungsbeweise verwendet wird.

9. Eingabe-, Verarbeitungs- und gesichertes Übertragungsverfahren von Authentisierungsdaten, **dadurch gekennzeichnet, dass** es die folgenden Schritte aufweist:
- Datenübertragung derart, dass alle Datenkommunikationen zwischen einem Benutzer eines Arbeitsplatzes (5, 6) und mindestens einem fernen Server (9, 10) über einen Zwischenschaltungsserver (3) gehen, der ein Sicherheitsmodul (4) aufweist, wobei das Sicherheitsmodul im gesicherten Modus mit einem Schnittstellen-Peripheriegerät (7) des Benutzers kommunizieren kann,
- Steuern des Schnittstellen-Peripheriegeräts (7) durch das Sicherheitsmodul, damit der Benutzer Authentisierungsdaten am Schnittstellen-Peripheriegerät (7) eingibt, das im gesicherten Modus arbeitet,
- Analyse des durch den Zwischenschaltungsserver gehenden Datenflusses, um eine vom fernen Server (9, 10) erzeugte Authentisierungsanforderung an den Benutzer des Arbeitsplatzes (5, 6) zu erfassen, wobei die Analyse dazu bestimmt ist, dann das Sicherheitsmodul (4) über Zugangseinrichtungen (18) auszulösen, und das Sicherheitsmodul (4) eine Authentisierungssitzung mit einem Authentifizierungsserver (11) initiieren, die Eingabe der Authentisierungsdaten des Benutzers über Steuereinrichtungen (14) des Schnittstellen-Peripheriegeräts (7) aktivieren, damit der Benutzer die Authentisierungsdaten am Schnittstellen-Peripheriegerät (7) eingibt, und die Authentisierungsdaten an den Authentifizierungsserver (11) übertragen kann.

## Claims

1. System for inputting, processing and securely transferring authentication data including:
- at least one peripheral (7) for interfacing with a user, said peripheral including secure communicating means and a secure operating mode both adapted for collecting authentication data, accessing a security component, and safely transferring the data by way of said communicating means, and
- an interposition server (3) including a security module (4), said security module including:
- means (13) for securely communicating with the interface peripheral (7) operating in secure mode,
- means (14) for controlling the interface peripheral adapted so that the user inputs authentication data on said interface peripheral (7) operating in secure mode, said controlling means being capable of processing said authentication data,
- means (16) for transmitting data such that all the data communications between the user of a workstation (5,6) and at least one remote server (9,10) transit by way of said interposition server.
- means (17) for analyzing the transiting stream of data capable of detecting an authentication request generated by the remote server (9,10) intended for the user of the workstation (5,6), said analyzing means being capable of then triggering the security module (4) through the access means (18), and said security module (4) being capable of initiating an authentication session with an authentication server (11), of activating the inputting of the authentication data of the user through the means (14) for controlling the interface peripheral (7), in order for the user to input the authentication data on the interface peripheral (7), and of transmitting the authentication data to the authentication server (11).

2. System according to Claim 1, in which the means (14) for controlling the interface peripheral (7) are securely programmable and monitored by the security module (4) to adapt the mode of inputting the authentication data to the requirements of an authentication server (11).

3. System according to Claim 1 or 2, in which the interface peripheral (7) is securely programmable to adapt the mode of inputting the authentication data to the requirements of a or of the authentication server (11).

4. System according to Claim 3, in which the programming of the interface peripheral (7) is achieved through the security module (4).

5. System according to any one of Claims 1 to 4, in which the interposition server furthermore includes means (15) for managing access sessions of workstations (5,6) to the interposition server (3), these means (15) being called by the means (17) for analyzing streams when a new instance of access to the interposition server (3) from said workstations is detected, and said session managing means being adapted to:
- handle and maintain the identifiers of the sessions for access of the workstations (5,6) to the interposition server (3),
- handle and maintain the authentication data of the sessions for access of the workstations (5,6) to the interposition server (3),
- allow the authentication of the sessions for access of the workstations (5,6) to the interposition server (3).

6. System according to Claim 5, in which the session managing means (15) are hosted in the security module (4), and accessed by the stream analyzing means (17) through the means (18) for accessing the security module (4).

7. System according to Claim 5, in which the session managing means (15) are hosted in the interposition server (3), outside the security module (4), and under the supervision of the latter.

8. System according to Claim 6 or 7, in which the means (15) for managing access sessions to the interposition server (3) are adapted to:
- receive from the stream analyzing means (17) proofs of user authentication produced by the authentication server (11),
- associate these proofs of authentication with a session for access of the workstations (5,6) to the interposition server (3),
- apply a policy of re-use of these proofs of authentication, and in particular trigger a new procedure for inputting authentication data if:
- the remote server (9,10) demands a re-authentication,
- the remote server (9,10) demands a particular method of authentication which is not that with which the existing proofs of authentication have been obtained,
- the policy of re-use of the proofs of authentication demands a re-authentication because:
- the validity of the proofs of authentication has expired,
- the new authentication request requires a method for inputting the authentication data at a level of security above the inputting method used to obtain the existing proofs of authentication.

9. Method for inputting, processing and securely transferring authentication data, **characterized in that** it includes the following steps:
- transmission of data such that all data communications between a user of a workstation (5,6) and at least one remote server (9,10) transit by way of an interposition server (3) including a security module (4), said security module being capable of communicating in secure mode with an interface peripheral (7) of said user,
- controlling of the interface peripheral (7) by the security module in such a way that the user inputs the authentication data on said interface peripheral (7) operating in secure mode,
- analysis of the stream of data transiting via the interposition server so as to detect an authentication request generated by the remote server (9,10) intended for the user of the workstation (5,6), said analysis being intended to then trigger the security module (4) through access means (18), and said security module (4) being capable of initiating an authentication session with an authentication server (11), of activating the inputting of the authentication data of the user through the means (14) for controlling the interface peripheral (7), in order that the user inputs the authentication data on the interface peripheral (7), and of transmitting the authentication data to the authentication server (11).
